# EUROPEAN PATENT SPECIFICATION

(11) **EP 4 403 279 B1**
(45) Date of publication and mention of the grant of the patent: **08.04.2026**
(21) Application number: 23218939.9
(22) Date of filing: 21.12.2023
(51) Int. Cl.: B22C 9/00, F16H 57/04, B22D 25/00, B22D 17/00, B22D 19/08, H02K 5/06, H02K 5/20, H02K 9/193, F16H 57/02

(54) **POWERTRAIN AND VEHICLE**
ANTRIEBSSTRANG UND FAHRZEUG
GROUPE MOTOPROPULSEUR ET VÉHICULE

(30) Priority: 19.01.2023 CN 202310125189
(43) Date of publication of application: 24.07.2024
(73) Proprietor: Huawei Digital Power Technologies Co., Ltd., Shenzhen, 518043 (CN)
(72) Inventor: XIONG, Qi, Shenzhen 518043 (CN); XIA, Gongchuan, Shenzhen 518043 (CN); YANG, Luyi, Shenzhen 518043 (CN)
(74) Representative: Isarpatent

(56) References cited:
- EP-A2- 0 477 767
- DE-A1- 102017 206 372
- DE-A1- 102019 112 147
- DE-B4- 102007 030 342
- US-A1- 2012 020 826

## Description

### TECHNICAL FIELD

This disclosure generally relates to the field of device cooling technologies, and the invention in particular relates to a method of manufacturing a powertrain, a power train, and a vehicle.

### BACKGROUND

A vehicle-mounted powertrain, including a motor and a reducer, where the powertrain is one of core components of a vehicle, and is configured to convert electric energy into kinetic energy, so that the vehicle can travel. The motor and the reducer usually generate heat during operation, and too much heat will affect normal operation of the motor and the reducer. Therefore, a cooling channel is usually disposed in a housing of the motor and the reducer, and a heat dissipation medium is provided in the cooling channel to dissipate heat for the motor and the reducer.

The housing of the powertrain is usually made through die casting. After the die casting is completed, the cooling channel may be processed in the housing through machining. Due to a process defect of the die casting process, shrinkage holes and shrinkage porosities are usually generated in the die casting part. When the cooling channel is provided in the housing through machining, shrinkage holes or shrinkage porosities may be easily exposed on an inner wall of the cooling channel. As a result, when a heat dissipation medium flows in the cooling channel, leakage easily occurs, which affects normal operation of the powertrain and reduces reliability of the powertrain.

Therefore, how to reduce or avoid shrinkage holes or shrinkage porosities on the inner wall of the cooling channel becomes an urgent problem to be resolved.

DE 10 2017 206372 A1 addresses the technical problem of medium leakage in metallic cast components, particularly in cast housings such as gearbox housings, which have at least one embedded pipe. The diisclosuredescribes a drainage system integrated into the cast component. This system collects and redirects any medium that enters the gaps between the cast material and the embedded pipe back into the interior of the housing. The eystem compirses drainage channels, rings and channels around the pipe that collect the medium and direct it to the drainage channels. The drainage system ensures that any medium entering the gaps is controlled and directed to a safe location within the housing, preventing external leakage.

DE 10 2019 112147 A1 addresses the technical problem to provide a method for casting a pipe into a component produced by a die-casting process that can be carried out with minimal effort and offers high process reliability. The disclosure solves this by proposing a method that involves the following several steps. Before a pipe is placed into the die-casting mold, it is filled with a medium (e.g., salt). Then the filled pipe is pressed by applying a compressive force, which reduces the cross-sectional area of the pipe and compresses the medium inside it. The pipe, now with a reduced cross-section and compressed medium, is placed into the die-casting mold, and the material forming the component is then cast around the pipe. This method ensures that the medium inside the pipe is sufficiently compressed to fill the pipe completely, preventing the pipe from being deformed or damaged by the high pressure during the die-casting process.

EP 0 477 767 A2 addresses the technical problem related to the design and construction of a gearbox housing, particularly for a vehicle differential gearbox. The specific issues includes space constraints, complexity and costs, and manufacturing challenges. For example, existing methods for integrating oil channels within the gearbox housing are not suitable for the materials and manufacturing processes typically used for vehicle gearboxes, such as sand casting with gray cast iron. This disclosure provides a gearbox housing made from cast metal that integrates an oil channel within the housing wall itself. By incorporating the oil channel within the gearbox housing wall, the need for external oil pipelines is eliminated. This reduces the space required for the gearbox assembly and improves the accessibility of other components. The integrated oil channel also reduces the number of external connections and components, simplifying the assembly process. This also minimizes potential sealing issues at connection points, thereby enhancing reliability and reducing costs associated with assembly and maintenance. Since the oil channel is created using a core during the casting process, which is compatible with traditional sand casting methods, this approach allows for the efficient production of the gearbox housing using existing manufacturing techniques and materials.

Document US 2012/020826 A1 discloses a moulded housing with cooling channels as part of an internal combustion engine.

### SUMMARY

The object of the present invention is to provide a method of manufacturing a powertrain, a powertrain made according to such a method, and a vehicle including the powertrain to resolve the following problem: Shrinkage holes or shrinkage porosities may be easily generated in a cooling pipe in an existing device housing, which increases a penetration risk of the cooling pipe. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

A first aspect according to the invention provides a method of manufacturing a powertrain, including a housing, where the housing has a plurality of cooling channels that intersect and communicate with each other; and
the housing is a die casting part, an inner wall of the cooling channel includes a compact layer, and density of the compact layer is greater than density of another part of the housing.

In the foregoing disposing manner, density of the compact layer is relatively high, and there are relatively few shrinkage holes and shrinkage porosities in the compact layer, which can effectively improve compactness of the inner wall of the cooling channel, reduce or avoid penetration of a heat dissipation medium in the cooling channel, and reduce a penetration risk of the cooling channel, thereby effectively improving reliability and stability of the powertrain.

In a possible implementation, an included angle between any two of the cooling channels that intersect and communicate with each other is 30° to 150°. In this way, the cooling channels in the housing can have a plurality of different layout manners, so as to meet different heat dissipation requirements of the powertrain. This can effectively improve proper distribution of the cooling channels in the housing, and improve evenness of distribution of the heat dissipation medium in the housing, thereby effectively improving heat dissipation efficiency of the heat dissipation medium for the powertrain and improving running reliability and stability of a device rate of the heat dissipation medium distributed in the housing, and increases a cooling speed of the powertrain, thereby effectively improving heat dissipation efficiency of the cooling channel for the powertrain and improving running stability of the powertrain.

According to the invention, the pre-embedded part includes a main section and a guide section with a tapered structure.

The main section is configured to be inserted into a positioning hole on the die casting mold. In this way, offsetting or misplacement of the pre-embedded part in the die casting mold can be reduced or avoided, thereby improving reliability and firmness of disposing the pre-embedded part in the die casting mold, avoiding offsetting of the cooling channel in the housing due to offsetting of the pre-embedded part, and enabling the cooling channels to be distributed in the housing in a preset manner.

The guide section is configured to provide guidance for inserting the main section into the positioning hole. For the guide section with the tapered structure, a diameter of an end that is of the guide section and that is far away from the main section is relatively small, so that it is more convenient for a worker to insert the guide section into the positioning hole on the die casting mold, so as to provide better guidance for inserting the main section into the positioning hole. This reduces or avoids cases in which the pre-embedded part gets stuck when being inserted into the positioning hole. This effectively simplifies assembly between the pre-embedded part and the positioning hole, and effectively improves work efficiency of the assembly operation between the pre-embedded component and the die casting mold.

In a possible implementation, the pre-embedded component is removed through deep-hole drilling or centered drilling. The deep-hole drilling and the centered drilling can accurately remove the pre-embedded component, so that the inner wall of the formed cooling channel is completely enclosed by the compact layer, thereby effectively reducing or avoiding a residual pre-embedded component on the inner wall of the cooling channel, and effectively improving precision of the cooling channel.

In a possible implementation, the pre-embedded component is formed by using a material such as aluminum, aluminum alloy, magnesium, magnesium alloy, zinc, or zinc alloy. The foregoing material has relatively low material hardness, and can be easily removed through drilling subsequently, thereby reducing a processing difficulty and improving processing efficiency.

A second aspect according to the invention provides a vehicle, including any one of the foregoing powertrains made by the aforementioned methods. Running stability of a power system of the vehicle can be effectively improved, thereby effectively improving power performance of the vehicle.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of manufacturing an inner channel of a die casting part in a related technology;
FIG. 2 is a schematic flowchart of manufacturing an inner channel of a die casting part in another related technology;
FIG. 3 is a schematic diagram of manufacturing an inner channel of a die casting part in still another related technology;
FIG. 4 is a schematic diagram of a structure of an inner channel of a die casting part;
FIG. 5 is a schematic diagram of a structure of a cooling channel disposed in a housing according to an embodiment of this application;
FIG. 6 is a schematic diagram of a structure of a pre-embedded component according to an embodiment of this application;
FIG. 7 is a schematic diagram of a structure of a pre-embedded component disposed in a housing according to an embodiment of this application;
FIG. 8 is a schematic diagram of a structure of a pre-embedded component according to an embodiment of this application;
FIG. 9 is a schematic diagram of a structure of another pre-embedded component according to an embodiment of this application;
FIG. 10 is a schematic diagram of a structure of still another pre-embedded component according to an embodiment of this application;
FIG. 11 is a schematic diagram of a structure of a pre-embedded part according to an embodiment of this application;
FIG. 12 is a schematic diagram of a structure of another pre-embedded part according to an embodiment of this application;
FIG. 13 is a schematic diagram of a structure of a part of a pre-embedded part located outside a housing according to an embodiment of this application;
FIG. 14 is an enlarged view of an area A in FIG. 13;
FIG. 15 is a flowchart of a method for preparing a housing of a powertrain according to an embodiment of this application;
FIG. 16 is a schematic diagram of a structure of a pre-embedded component disposed in a die casting mold according to an embodiment of this application;
FIG. 17 is a schematic diagram of a structure of a die casting material disposed in a die casting mold according to an embodiment of this application;
FIG. 18 is a schematic diagram of a structure of a housing and a pre-embedded component of a powertrain after being demolded according to an embodiment of this application; and
FIG. 19 is a schematic diagram of a structure formed after a pre-embedded component is removed from a housing according to an embodiment of this application.

### Descriptions of reference numerals:

100-Housing;
110-Cooling channel; 111-First cooling channel; 112-Second cooling channel; 113-Third cooling channel;
120-Compact layer;
200-Die casting mold;
210-Shell; 220-Cavity;
300-Pre-embedded component;
310-First pre-embedded part; 311-Main section; 312-Guide section;
320-Second pre-embedded part; 330-Third pre-embedded part; and 340-Fourth pre-embedded part.

### DESCRIPTION OF EMBODIMENTS

Terms used in implementations of this application are only used to explain specific embodiments of this application, but are not intended to limit this application.

For ease of understanding, related technical terms in embodiments of this application are first explained and described.

Compact layer: A layer of structure with relatively low permeability and relatively compact structure in the die casting part, which is usually located on a surface that is of the die casting structure and that faces a cavity, that is, located on a part such as an outer surface of the die casting part of the formed die casting part, or an inner wall of a die casting hole.

Shrinkage holes: Holes that are generated when a die casting part shrinks during cooling and cannot be supplemented by a metal solution.

Shrinkage porosities: Scattered small holes that are formed when a final solidified area of the die casting part is not supplemented by a metal solution. The shrinkage holes and the shrinkage porosities are usually located inside a die casting part.

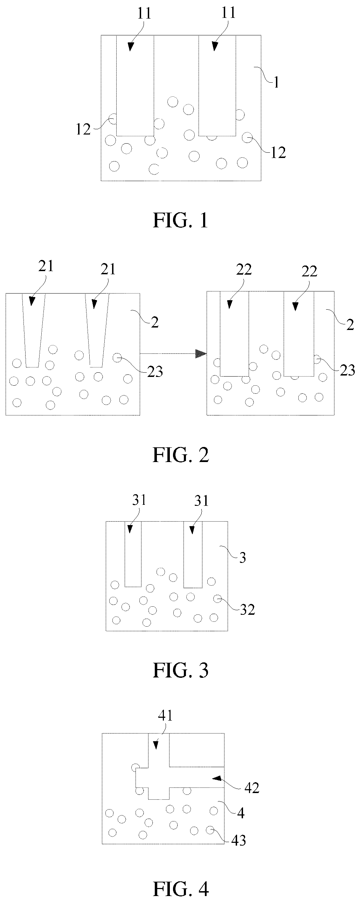

FIG. 1 is a schematic diagram of manufacturing an inner channel of a die casting part in a related technology. FIG. 2 is a schematic flowchart of manufacturing an inner channel of a die casting part in another related technology. FIG. 3 is a schematic diagram of manufacturing an inner channel of a die casting part in still another related technology. FIG. 4 is a schematic diagram of a structure of an inner channel of a die casting part.

A housing of a powertrain is usually a die casting part (that is, a mechanical part manufactured through die casting). Currently, a cooling channel on the die casting part is generally manufactured in the following three manners:
Solution 1: Refer to FIG. 1. Drilling is directly performed on a die casting part 1 through machining, to form a cooling channel 11. However, in a drilling process, shrinkage holes or shrinkage porosities 12 in the die casting part 1 may be easily exposed on the inner wall of the cooling channel 11, thereby reducing density of the inner wall of the cooling channel, and increasing a risk of penetration of a heat dissipation medium in the cooling channel.

Solution 2: Refer to FIG. 2. A prefabricated hole 21 is synchronously formed in a die casting part 2 in a process of manufacturing a die casting part. For example, a columnar mechanical part may be disposed in the die casting mold, and then a die casting material is cast in the mold. After the die casting material is cooled and solidified, the solidified die casting material is removed from the mold, and the columnar mechanical part is also removed from the die casting material, to form the prefabricated hole 21 in the die casting part. Then, the prefabricated hole 21 is processed (for example, a hole diameter is expanded, or a hole depth is extended) according to a size requirement of the cooling channel, so that the prefabricated hole 21 forms a cooling channel 22 that meets a requirement after being processed. An inner wall of the formed prefabricated hole 21 has a compact layer. However, in a process of machining the prefabricated hole, the compact layer on the inner wall of the prefabricated hole 21 is damaged, so that the shrinkage hole or the shrinkage porosity 23 in the die casting part 2 is exposed on an inner wall of the cooling channel 22, thereby reducing compactness of the inner wall of the cooling channel, and increasing a risk of penetration of a heat dissipation medium in the cooling channel.

Solution 3: Refer to FIG. 3. A cooling channel 31 is synchronously formed in a process of manufacturing a die casting part 3. For example, a prefabricated hole may be manufactured according to a size requirement of the cooling channel 31, so that a size specification of the prefabricated hole on a die casting part 3 is the same as that of the cooling channel 31, so that the prefabricated hole does not need to be reprocessed. In this way, the compact layer on the surface of the prefabricated hole is retained, and exposure of the shrinkage hole or shrinkage porosity 32 in the die casting part 3 to the inner wall of the cooling channel 31 is reduced or avoided.

However, the cooling channel usually has a relatively complex structure, and there may be a plurality of intersecting channels. For example, as shown in FIG. 4, a first cooling channel 41 intersects and communicates with a second cooling channel 42 on a die casting part 4. If a plurality of intersecting cooling channels are formed by using prefabricated holes (that is, solution 3), it is difficult to perform demolding. Therefore, some of the cooling channels are usually formed by using prefabricated holes, and the remaining cooling channels are formed through drilling on the die casting part. For example, the first cooling channel 41 in FIG. 4 is directly formed in the manner in solution 3, and the second cooling channel 42 is drilled through machining. However, a shrinkage hole and shrinkage porosity 43 still exist on the inner wall of the cooling channel (for example, the second cooling channel 42) that is formed through machining. This affects compactness of the inner wall of the cooling channel (the second cooling channel 42), and increases a risk of penetration of a heat dissipation medium in the cooling channel.

To resolve the foregoing problem, an embodiment of this application provides a powertrain. A housing of the powertrain has a plurality of cooling channels that intersect and communicate with each other. An inner wall of the cooling channel includes a compact layer, and density of the compact layer is greater than density of another part of the housing. This can effectively improve the compactness of the cooling channel, and reduce the penetration risk of the heat dissipation medium.

The following clearly and completely describes technical solutions in embodiments of this application with reference to accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

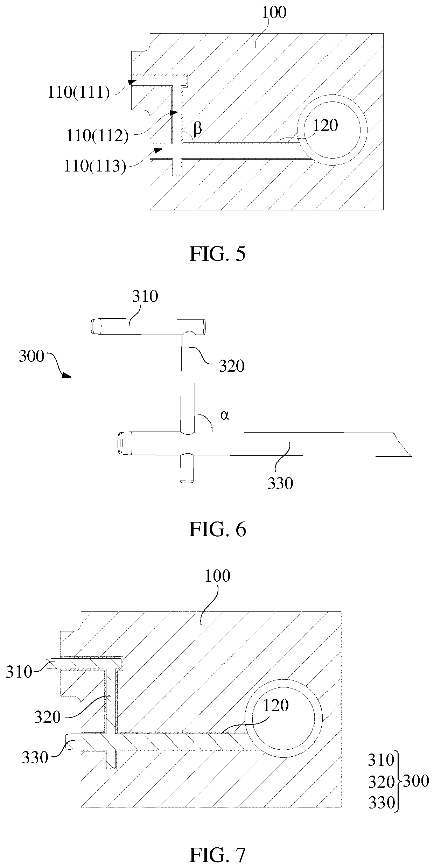

FIG. 5 is a schematic diagram of a structure of a cooling channel disposed in a housing according to an embodiment of this application.

An embodiment of this application provides a powertrain. The powertrain may include a motor, a reducer, and the like. The powertrain may be applied to a vehicle, to provide power for the vehicle, so that the vehicle can travel. Refer to FIG. 5. The powertrain may include a housing 100. The housing 100 has an accommodating cavity (not shown in the figure). A main mechanical part of the powertrain may be disposed in the accommodating cavity. For example, a winding, a rotor, and the like of a motor may be disposed in the accommodating cavity of the housing 100, or a transmission mechanism of a reducer, for example, a gear transmission component, may be further disposed in the accommodating cavity of the housing 100.

For example, the housing 100 may include a main part (not shown in the figure) and an end cover (not shown in the figure) disposed on the main part, and the main part and the end cover may be jointly enclosed to form an accommodating cavity. In a process of assembling the powertrain, the end cover may be first removed from the main part, and then the main mechanical part (for example, the winding, the rotor, or the transmission mechanism of the reducer) of the powertrain is installed into the accommodating cavity. After the main mechanical part in the accommodating cavity is installed, the end cover may be installed on the main part, so as to complete assembly of the powertrain.

Refer to FIG. 5. A plurality of cooling channels 110 (for example, the first cooling channel 111, the second cooling channel 112, and the third cooling channel 113 in FIG. 5) that intersect and communicate with each other may be disposed in the housing 100, and a heat dissipation medium (for example, the heat dissipation medium may be cooling water, cooling fluid, cooling oil, and the like) may be disposed in the cooling channel 110. For example, the cooling channel 110 may be disposed only on the housing body, or may be disposed only on the end cover; or cooling channels 110 may be disposed on both the housing body and the end cover. In a running process of the powertrain, a main mechanical part inside the powertrain generates heat, for example, heat is generated in a rotating process of a motor rotor, and heat is generated in a running process of a transmission mechanism in the reducer. In this case, the heat dissipation medium may absorb heat in the accommodating cavity, so as to perform heat dissipation and cooling on the main mechanical part in the accommodating cavity, thereby effectively reducing or avoiding cases in which normal running of the powertrain is affected by an excessively high temperature inside the powertrain, and effectively improving running reliability and stability of the powertrain.

The housing 100 of the powertrain may be a die casting part. For example, the main part and the end cover of the housing 100 may be made through die casting. Die casting is a metal casting process, and is a precision casting method that uses high pressure to force metal melting hydraulic pressure into a metal mold with a complex shape (that is, a die casting mold). For example, a liquid metal solution (that is, a die casting material) may be injected into the die casting mold, and after the metal is cooled and solidified, a solidified die casting part is removed from the die casting mold, to obtain a die casting part.

Refer to FIG. 5. An inner wall of a cooling channel 110 may include a compact layer 120, and density of the compact layer 120 is greater than density of another part of the housing 100. For example, the inner wall of the cooling channel 110 may be completely enclosed by the compact layer 120. The compact layer 120 has relatively high density, and there are relatively few shrinkage holes and shrinkage porosities in the compact layer 120. This can effectively improve compactness of the inner wall of the cooling channel 110, reduce or avoid penetration of a heat dissipation medium in the cooling channel 110, and reduce a penetration risk of the cooling channel 110, thereby effectively improving reliability and stability of a powertrain.

FIG. 6 is a schematic diagram of a structure of a pre-embedded component according to an embodiment of this application. FIG. 7 is a schematic diagram of a structure of a pre-embedded component disposed in a housing according to an embodiment of this application.

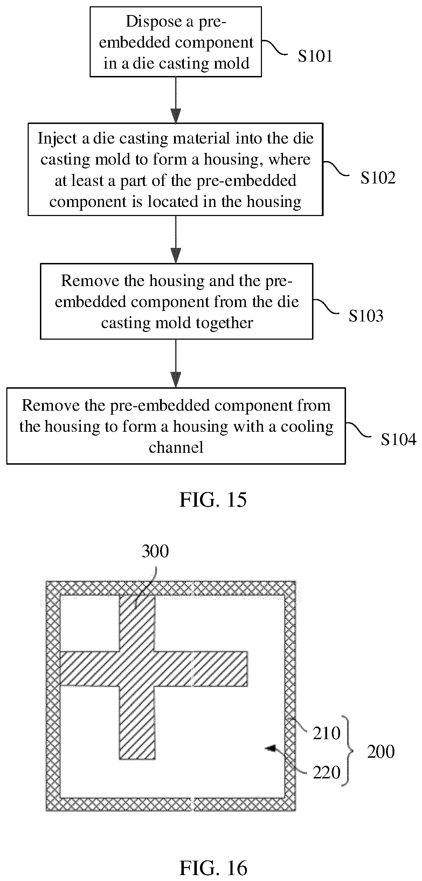

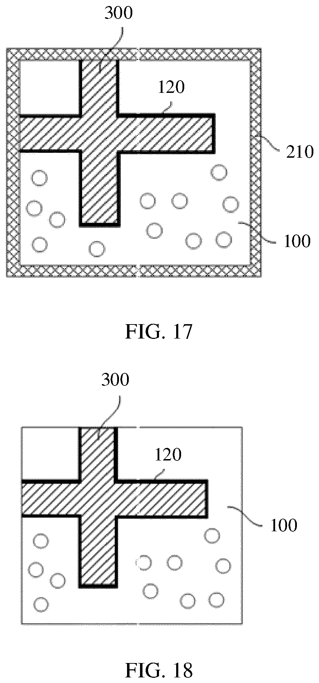

Refer to FIG. 6. A cooling channel 110 may be formed by disposing a pre-embedded component 300 in a die casting mold and removing a pre-embedded component after a die casting part (that is, the housing 100) is demolded. For example, as shown in FIG. 6, according to a structure requirement of the cooling channel 110, a pre-embedded component 300 that meets the requirement may be disposed in a die casting mold 200 (as shown in FIG. 16) in advance. Then, a metal solution is injected into the die casting mold 200, so that the metal solution can fill a cavity 220 of the die casting mold 200 (as shown in FIG. 17), and the pre-embedded component 300 located in the cavity 220 is surrounded. After the metal solution is cooled and solidified, the die casting part (that is, the housing 100) and the pre-embedded component 300 may be removed from the die casting mold 200 together. In this case, with reference to FIG. 7, the pre-embedded component 300 is located inside the die casting part (that is, the housing 100), and the pre-embedded component 300 may be removed from the die casting part (that is, the housing 100), to form the cooling channel 110 in the die casting mold (refer to FIG. 5).

Herein, in a process of cooling and solidification of a metal solution, a compact layer 120 may be formed on a surface that is of the metal solution and that is in contact with the pre-embedded component 300. After the pre-embedded component 300 is removed from the die casting part to form a cooling channel 110, the compact layer 120 may be exposed to an inner wall of the cooling channel 110, so that the inner wall of the cooling channel 110 is completely enclosed by the compact layer 120, thereby effectively improving compactness of the inner wall of the cooling channel 110.

For example, the pre-embedded component 300 may be removed through deep-hole drilling or centered drilling. For example, the deep-hole drilling may be gun drilling. In the foregoing removal manner, the pre-embedded component 300 may be accurately removed, so that the inner wall of the formed cooling channel 110 is completely enclosed by the compact layer 120, thereby effectively reducing or preventing the pre-embedded component 300 from remaining on the inner wall of the cooling channel 110, and effectively improving precision of the cooling channel 110.

A thickness of the compact layer 120 may be 0.5 mm to 1.5 mm, that is, a size of the compact layer 120 in a radial direction of the cooling channel 110 is 0.5 mm to 1.5 mm. In this way, compactness of the inner wall of the cooling channel 110 can be effectively improved, and penetration of the cooling channel 110 can be effectively reduced or avoided, thereby effectively improving stability of circulation of a heat dissipation medium in the cooling channel 110.

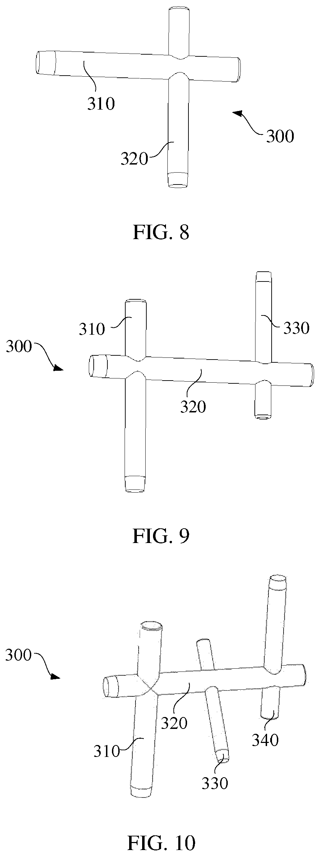

FIG. 8 is a schematic diagram of a structure of a pre-embedded component according to an embodiment of this application. FIG. 9 is a schematic diagram of a structure of another pre-embedded component according to an embodiment of this application. FIG. 10 is a schematic diagram of a structure of still another pre-embedded component according to an embodiment of this application.

In this embodiment of this application, a pre-embedded component 300 may include at least two pre-embedded parts. The at least two pre-embedded parts may intersect with each other. After the at least two pre-embedded parts are removed, at least two cooling channels 110 that intersect and communicate with each other may be formed in a housing 100. For example, refer to FIG. 8. A pre-embedded component 300 may include two pre-embedded parts, for example, may include a first pre-embedded part 310 and a second pre-embedded part 320. A heat dissipation medium may flow in two cooling channels 110 that intersect and communicate with each other, to perform heat dissipation and cooling on a main mechanical part in the housing 100, so as to reduce an overall temperature of a powertrain and improve running stability of the powertrain.

Alternatively, refer to FIG. 9. A plurality of cooling channels 110 may further include a first cooling channel 111, a second cooling channel 112, and a third cooling channel 113, and the pre-embedded component 300 may include a first pre-embedded part 310, a second pre-embedded part 320, and a third pre-embedded part 330, where both the first pre-embedded part 310 and the third pre-embedded part 330 may intersect with the second pre-embedded part 320. After the first pre-embedded part 310, the second pre-embedded part 320, and the third pre-embedded part 330 are removed, the first cooling channel 111, the second cooling channel 112, and the third cooling channel 113 may be formed in a housing 100, and both the first cooling channel 111 and the third cooling channel 113 may intersect and communicate with the second cooling channel 112. A heat dissipation medium in the first cooling channel 111 may flow into the third cooling channel 113 through the second cooling channel 112, so that the heat dissipation medium may circulate in the first cooling channel 111, the second cooling channel 112, and the third cooling channel 113. This effectively increases a flow volume of the heat dissipation medium distributed in the housing 100, and increases a cooling speed of the powertrain, thereby effectively improving heat dissipation efficiency of the cooling channel 110 for the powertrain and improving running stability of the powertrain.

Alternatively, in some examples, the pre-embedded component 300 may further include more than three pre-embedded parts. For example, refer to FIG. 10. The pre-embedded component 300 may include a first pre-embedded part 310, a second pre-embedded part 320, a third pre-embedded part 330, and a fourth pre-embedded part 340. The four pre-embedded parts may intersect and communicate with each other. The four pre-embedded parts may intersect and communicate with each other in a plurality of manners, so as to form cooling channels 110 in a plurality of communication forms in the housing 100 after the pre-embedded component 300 is removed. For example, the first pre-embedded part 310, the third pre-embedded part 330, and the fourth pre-embedded part 340 may all intersect and communicate with the second pre-embedded part 320 in a manner as shown in FIG. 10 or in any other manner, provided that the formed cooling channels 110 communicate with each other. Specifically, a connection manner between the pre-embedded parts may be selected and set based on a specific application scenario.

In this embodiment of this application, the pre-embedded component 300 may be manufactured in a plurality of manners, for example, may be manufactured in a manner of die casting, machining, extrusion, or cold heading, or the pre-embedded component 300 may be assembled by using a formed profile. The die casting manner may include die casting with mold and single-mold die casting. The die casting with mold means that the pre-embedded component 300 is die-casted together with the die casting part (that is, the housing 100) in a same mold. For example, another cavity may be disposed in the die casting mold, to form the pre-embedded component 300. For example, the die casting mold may include a first cavity (not shown in the figure) and a second cavity (not shown in the figure). The first cavity may be used to form the housing 100, and the second cavity may be used to form the pre-embedded component 300. When the die casting material is injected into the first cavity to form the housing 100, the die casting material may also be injected into the second cavity to form the pre-embedded component 300. Then, in a next die casting process, the pre-embedded component 300 formed last time may be disposed in a cavity (that is, the first cavity) used to form the housing 100, so that the pre-embedded component 300 formed last time may be used in this die casting operation of the housing 100. This cycle is repeated.

The single-mold die casting means that a die casting mold is separately provided, so as to perform die casting and molding on the pre-embedded component 300. In this case, a molding operation of the pre-embedded component 300 and a molding operation of the housing 100 may be performed independently.

In this embodiment of this application, an included angle between any two of the cooling channels 110 that intersect and communicate with each other may be β (refer to an included angle between the second cooling channel 112 and the third cooling channel 113 shown in FIG. 5), and a value range of β may be 30° to 150°. For example, when there are two cooling channels in the housing 100, the included angle between the two cooling channels may be 30° to 150°. For example, an included angle between the two pre-embedded parts that interact with each other may be α (refer to an included angle between the second pre-embedded part 320 and the third pre-embedded part 330 shown in FIG. 6), and a value range of α may be 30° to 150°. In this way, after the two pre-embedded parts that intersect with each other are removed, two cooling channels 110 that intersect and communicate with each other may be formed in the housing 100, and an included angle β between the two cooling channels 110 is 30° to 150°.

Alternatively, when the cooling channel 110 in the housing 100 includes the first cooling channel 111, the second cooling channel 112, and the third cooling channel 113, an included angle between the first cooling channel 111 and the second cooling channel 112 may be 30° to 150°. For example, an included angle between the first pre-embedded part 310 and the second pre-embedded part 320 that intersect with each other may be 30° to 150°. In this way, after the first pre-embedded part 310 and the second pre-embedded part 320 are removed, the first cooling channel 111 and the second cooling channel 112 that intersect and communicate with each other may be formed in the housing 100, and an included angle between the first cooling channel 111 and the second cooling channel 112 is also 30° to 150°.

Alternatively, in some examples, an included angle between the second cooling channel 112 and the third cooling channel 113 may be 30° to 150°, or both an included angle between the first cooling channel 111 and the second cooling channel 112 and an included angle between the third cooling channel 113 and the second cooling channel 112 may be 30° to 150°.

In this way, design requirements of cooling channels 110 in different structural parts of the housing 100 can be met. For example, when more than two intersecting cooling channels 110 are disposed in an irregularly shaped part of the housing 100, an included angle between any two intersecting cooling channels 110 may be relatively small (for example, an included angle between the two cooling channels 110 may be an acute angle), so as to reduce a size of an entire cooling channel in one direction, so that the cooling channels 110 may be distributed in the housing 100 as evenly as possible. Alternatively, when the cooling channels 110 are disposed at a relatively regularly shaped part in the housing 100, an included angle between any two intersecting cooling channels 110 may be 90°, so that the plurality of formed cooling channels 110 are in a rectangular grid structure, so as to improve evenness of distribution of the plurality of cooling channels 110 in the housing.

In the foregoing manner of disposing the pre-embedded parts, the cooling channels in the housing can have a plurality of different layout manners, so as to meet different heat dissipation requirements of the powertrain. This can effectively improve proper distribution of the cooling channels 110 in the housing 100, and improve evenness of distribution of the heat dissipation medium in the housing, thereby effectively improving heat dissipation efficiency of the heat dissipation medium for the powertrain and improving running reliability and stability of a device.

In addition, an included angle between any two of the cooling channels 110 that intersect and communicate with each other is 30° to 150°, so that a sharp-angle structure caused by an excessively small included angle between the two cooling channels 110 that intersect and communicate with each other can be reduced or avoided, and stress concentration caused by the sharp-angle structure in the housing 100 can be prevented. In addition, this improves circulation of a heat dissipation medium in the cooling channels 110, and improves heat dissipation efficiency of the heat dissipation medium.

For example, an included angle between any two of the cooling channels 110 that intersect and communicate with each other may be 45°, 60°, or 90°. For example, an included angle between any pre-embedded parts that intersect with each other may be 45°, 60°, or 90°. In this way, after the pre-embedded parts that intersect with each other are removed, cooling channels 110 that intersect and communicate with each other may be formed in the housing 100, and an included angle between two cooling channels 110 that intersect and communicate with each other is 45°, 60°, or 90°. Regularity of arrangement between the cooling channels 110 can be improved by making the included angle between any two of the cooling channels 110 that intersect and communicate with each other be the foregoing special angle. This improves even circulation of the heat dissipation medium in the housing 100, thereby effectively improving heat dissipation efficiency of the heat dissipation medium for the housing 100.

In addition, an included angle α between any two intersecting pre-embedded parts is 45°, 60°, or 90°, so that in a process in which the pre-embedded component 300 is removed from the housing 100 through drilling, positioning and processing between a cutting tool and the housing 100 can be further facilitated. This improves precision of removing the pre-embedded component 300, and prevents position offsetting of the cooling channel 110 due to offsetting during drilling, thereby effectively improving overall disposing precision of the cooling channel 110 in the housing 100.

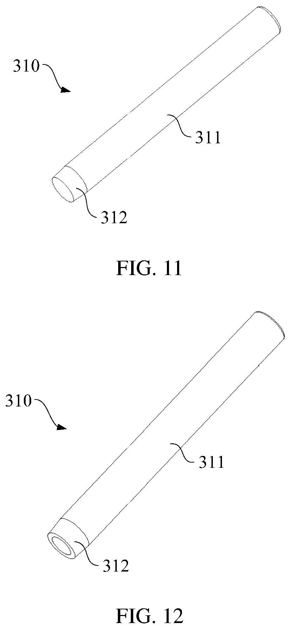

FIG. 11 is a schematic diagram of a structure of a pre-embedded part according to an embodiment of this application. FIG. 12 is a schematic diagram of a structure of another pre-embedded part according to an embodiment of this application.

The first pre-embedded part 310 is used as an example. The pre-embedded part may be of a cylindrical structure. For example, as shown in FIG. 11, the pre-embedded part may be a cylindrical solid pipe; or as shown in FIG. 12, the pre-embedded part may be a cylindrical hollow pipe. In this way, after the pre-embedded part in the housing 100 is removed, a cooling channel 110 with a circular cross-section shape may be formed in the housing 100. Smoothness of an inner wall of the cooling channel 110 can be improved, which reduces or avoids a dead angle, and improves smoothness of a heat dissipation medium flowing in the cooling channel 110. In addition, the circular cooling channel 110 may further reduce a sharp-angle structure in the hole, thereby reducing stress concentration and improving structural stability of the cooling channel 110.

In addition, the pre-embedded part is disposed as a cylindrical structure, which may further facilitate processing and removal of the pre-embedded part in comparison with other cross-section shapes (for example, a rectangle or an irregular shape). For example, when the pre-embedded part is processed through deep-hole drilling or centered drilling, a hole drilled by using a drill bit is also a cylindrical hole. A drill bit with a diameter close to a diameter of the pre-embedded part can be selected to process the pre-embedded part, so as to improve coincidence between the drilled hole and the pre-embedded part. This helps control a quantity of removed pre-embedded parts, avoid a residual pre-embedded part on an inner wall of the cooling channel 110, and prevents any residual pre-embedded part from falling off in a subsequent use process, thereby affecting circulation of a heat dissipation medium in the cooling channel 110.

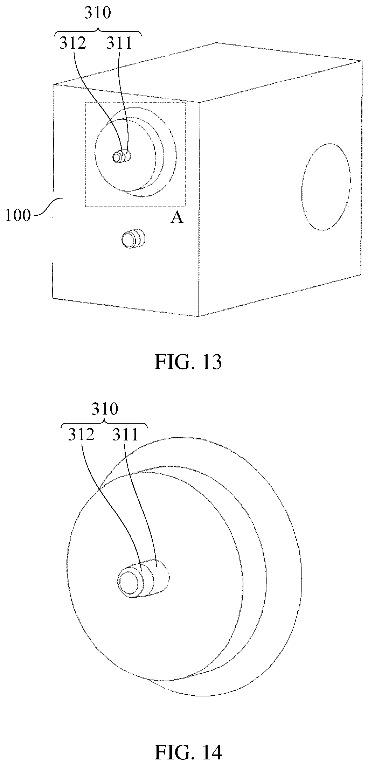

FIG. 13 is a schematic diagram of a structure of a part of a pre-embedded part located outside a housing according to an embodiment of this application. FIG. 14 is an enlarged view of an area A in FIG. 13.

Refer to FIG. 13 and FIG. 14. The first pre-embedded part 310 is still used as an example. The pre-embedded part may include a main section 311 and a guide section 312 with a tapered structure. The main section 311 may be configured to be inserted into a positioning hole (not shown in the figure) on a die casting mold 200, and the guide section 312 may be configured to provide guidance for inserting the main section 311 into a positioning hole. For example, the positioning hole may be disposed on the shell 210 of the die casting mold 200, the guide section 312 may be located at an end of the main section 311, and an end with a smaller diameter of the guide section 312 with the tapered structure may be located at an end that is of the guide section 312 and that is opposite to the main section 311. In a process of inserting the main section 311 of the pre-embedded part (for example, the first pre-embedded part 310) into the positioning hole, the guide section 312 with the tapered structure may first pass through the positioning hole. Then, an end that is of the main section 311 and that is close to the guide section 312 is clamped in the positioning hole, and the remaining part of the main section 311 is located in a cavity 220 of a die casting mold 200, so that the pre-embedded part can be connected by inserting the main section 311 into the positioning hole. In this way, offsetting or misplacement of the pre-embedded part in the die casting mold 200 can be reduced or avoided, thereby improving reliability and firmness of disposing the pre-embedded part in the die casting mold 200, and avoids offsetting of the cooling channel 110 in the housing 100 due to offsetting of the pre-embedded part, so that the cooling channel 110 can be distributed in the housing 100 in a preset manner.

A diameter of an end that is of the guide section 312 with the tapered structure and that is away from the main section 311 is relatively small, so that it is more convenient for a worker to insert the guide section 312 into the positioning hole of the die casting mold 200, so as to provide better guidance for inserting the main section 311 into the positioning hole. This reduces or avoids cases in which the pre-embedded part gets stuck when being inserted into the positioning hole. This effectively simplifies assembly between the pre-embedded part and the positioning hole, and effectively improves work efficiency of the assembly operation between the pre-embedded component 300 and the die casting mold 200.

In this embodiment of this application, a material used to form the pre-embedded component 300 may be aluminum, aluminum alloy, magnesium, magnesium alloy, zinc, or zinc alloy. The foregoing material has relatively low material hardness, and can be easily removed through drilling subsequently, thereby reducing a processing difficulty and improving processing efficiency.

A material used to form the housing 100 may be the same as the material used to form the pre-embedded component 300. For example, the material of the housing 100 may also be aluminum, aluminum alloy, magnesium, magnesium alloy, zinc, or zinc alloy. Alternatively, in some examples, the material used to form the housing may be another material. Specifically, a material used to form the housing 100 may be selected and set based on a specific application scenario.

The following describes, with reference to the accompanying drawings, a method for preparing a housing of a powertrain according to an embodiment of this application.

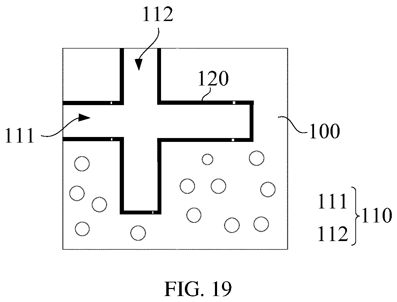

FIG. 15 is a flowchart of a method for preparing a powertrain housing according to an embodiment of this application. FIG. 16 is a schematic diagram of a structure of disposing a pre-embedded component in a die casting mold according to an embodiment of this application. FIG. 17 is a schematic diagram of a structure of disposing a die casting material in a die casting mold according to an embodiment of this application. FIG. 18 is a schematic diagram of a structure of a housing of a powertrain and a pre-embedded component after being demolded according to an embodiment of this application. FIG. 19 is a schematic diagram of a structure formed after a pre-embedded component is removed from a housing according to an embodiment of this application.

Refer to FIG. 15. A method for preparing a housing of a powertrain according to an embodiment of this application may include the following steps.

S101: Dispose a pre-embedded component in a die casting mold.

For example, with reference to FIG. 16, the die casting mold 200 may include a shell 210, and the shell 210 may be enclosed to form a cavity 220. A part (for example, an end of the pre-embedded part) of the pre-embedded component 300 may be connected to a shell 210 of the die casting mold 200, so that a remaining part of a pre-embedded component 300 may be located in the cavity 220 of the die casting mold 200.

S102: Inject a die casting material into the die casting mold to form a housing, where at least a part of the pre-embedded component is located in the housing.

For example, with reference to FIG. 17, a liquid die casting material may be injected into the cavity 220 of the die casting mold 200, so that the die casting material fills the cavity 220 of the die casting mold 200, and a part of the pre-embedded component 300 that is located in the cavity 220 is wrapped. After the die casting material is cooled and solidified, the housing 100 of the die casting part may be formed in the cavity 220 of the die casting mold 200, and a part of a structure that is of the pre-embedded component 300 and that is located in the cavity 220 may be located in the housing 100.

S103: Remove the housing and the pre-embedded component from the die casting mold together.

For example, with reference to FIG. 18, a part that is of the pre-embedded component 300 and that is connected to the shell 210 of the die casting mold 200 may be removed from the shell 210, and the housing 100 is removed from the die casting mold 200, so that the housing 100 and the pre-embedded component 300 are removed from the die casting mold 200 together.

S104: Remove the pre-embedded component from the housing to form a housing with a cooling channel.

For example, with reference to FIG. 19, the pre-embedded component 300 may be removed from the housing 100 through drilling, so that a cooling channel 110 may be formed inside the housing 100 after the pre-embedded component 300 is removed from the housing 100.

Refer to FIG. 18. After the die casting material is injected into the die casting mold 200, a compact layer 120 is formed on a surface that is of the formed housing 100 and that is in contact with the pre-embedded component 300, and the compact layer 120 may be disposed around a periphery of the pre-embedded component 300. For example, after the liquid die casting material is injected into the cavity 220 of the die casting mold 200, the die casting material may fill the entire cavity 220 of the die casting mold 200, and wrap the periphery of the pre-embedded component 300 (herein, the pre-embedded component 300 is a part that is in the cavity 220 of the die casting mold 200). After the die casting material is cooled and solidified, the housing 100 of the die casting part may be formed, and the compact layer 120 is provided on a surface that is of the housing 100 and that is in contact with the pre-embedded component 300.

According to a structure requirement of the cooling channel, the pre-embedded component 300 may be disposed as a required structure. For example, the pre-embedded component 300 may be formed by two intersecting cylindrical structures, as shown in FIG. 18; or the pre-embedded component 300 may be formed by three intersecting cylindrical structures. Because the pre-embedded component 300 and the housing are removed from the die casting mold 200 together, even if a structure of the pre-embedded component 300 is relatively complex, the pre-embedded component 300 and the housing 100 may still be removed from the die casting mold 200 together. In this way, after the pre-embedded component 300 is removed from the housing 100 and the cooling channel 110 is formed in the housing 100, the foregoing compact layer 120 may be exposed to an inner wall of the cooling channel 110, so that the inner wall of the cooling channel 110 is enclosed by the compact layer 120. This can reduce or avoid shrinkage holes or shrinkage porosities on the inner wall of the cooling channel 110, thereby effectively improving compactness of the inner wall of the cooling channel 110, reducing a penetration risk of the cooling channel 110, and improving overall structural stability and reliability of the cooling channel 110.

In a process of removing the pre-embedded component 300 from the housing 100, a hole may be drilled on the pre-embedded component 300, and a hole diameter of the drilled hole may extend to the compact layer 120, so that the inner wall of the cooling channel 110 in the housing is enclosed by the compact layer 120. For example, a radius of the drilled hole may be greater than or equal to a radius of the pre-embedded part, and is less than a sum of the radius of the pre-embedded part and a thickness of the compact layer 120. In this way, the inner wall of the cooling channel 110 formed after the drilling may be located on the compact layer 120, so that the inner wall of the cooling channel 110 may be enclosed by the compact layer 120. The compact layer 120 has relatively good compactness, and has relatively few shrinkage holes and shrinkage porosities in the compact layer 120, so that compactness of the inner wall of the cooling channel 110 can be effectively improved, and a risk of penetration of the heat dissipation medium in the cooling channel 110 can be reduced.

An embodiment of this application may further provide a vehicle. The vehicle may include the foregoing powertrain. For example, the vehicle may be a vehicle (for example, a fuel vehicle), an electric vehicle (Electric Vehicle, EV for short), or an electric dining vehicle, or may be an electric express vehicle, or may be a pure electric vehicle (Pure Electric Vehicle /Battery Electric Vehicle, PEV/BEV for short), a hybrid electric vehicle (Hybrid Electric Vehicle, HEV for short), or a range extended electric vehicle (Range Extended Electric Vehicle, REEV for short), a plug-in hybrid electric vehicle (Plug-in Hybrid Electric Vehicle, PHEV for short), or a new energy vehicle (New Energy Vehicle). The device may provide power for the vehicle, so that the vehicle can travel.

The vehicle includes the foregoing powertrain, so that running stability of a power system of the vehicle can be effectively improved, thereby effectively improving power performance of the vehicle.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation. The terms "first", "second", "third", "fourth", and the like (if any) are intended to distinguish between similar objects but do not necessarily indicate a specific order or sequence.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A method of manufacturing a powertrain, comprising preparing a housing including a plurality of cooling channels (110) that intersect and communicate with each other, wherein the housing (100) is a die casting part, and preparing an inner wall of the cooling channel (11, 22, 31, 110) to comprise a compact layer (120), wherein a density of the compact layer (120) is greater than density of another part of the housing;
wherein at least one of the cooling channels (110) is formed by disposing a pre-embedded component (300) in a die casting mold (200) and removing the pre-embedded component (300) after the die casting part is demolded,
**characterized in that** the pre-embedded component comprises a main section (311) and a guide section (312) with a tapered structure;
the main section (311) is inserted into a positioning hole on the die casting mold (200); and
the guide section (312) provides guidance for inserting the main section (311) into the positioning hole.

2. The method according to claim 1, wherein an included angle between any two of the cooling channels (110) that intersect and communicate with each other is 30° to 150°.

3. The method according to claim 2, wherein the included angle between any two of the cooling channels (110) that intersect and communicate with each other is 45°, 60°, or 90°.

4. The method according to any one of claims 1 to 3, wherein a thickness of the compact layer (120) is 0.5 mm to 1.5 mm.

5. The method according to claim 1,
wherein the pre-embedded component (300) comprises at least two pre-embedded parts, and the at least two pre-embedded parts intersect with each other; and
after the at least two pre-embedded parts are removed, at least two cooling channels (110) that intersect and communicate with each other are formed in the housing (100).

6. The method according to claim 1, wherein the plurality of cooling channels (110) comprise a first cooling channel (41, 111), a second cooling channel (42, 112), and a third cooling channel (113);
the pre-embedded component (300) comprises a first pre-embedded part (310), a second pre-embedded part (320), and a third pre-embedded part (330);
both the first pre-embedded part (310) and the third pre-embedded part intersect with the second pre-embedded part (320); and
after the first pre-embedded part (310), the second pre-embedded part (320), and the third pre-embedded part (330) are removed, a first cooling channel (41, 111), a second cooling channel (42, 112), and a third cooling channel (113) are formed in the housing (100), and both the first cooling channel (41, 111) and the third cooling channel intersect and communicate with the second cooling channel (42, 112).

7. The method according to any one of claims 1 to 5, wherein the pre-embedded component (300) is removed through deep-hole drilling or centered drilling.

8. The method according to any one of claims 1 to 6, wherein the pre-embedded component (300) is formed by using a material such as aluminum, aluminum alloy, magnesium, magnesium alloy, zinc, or zinc alloy.

9. A powertrain made according to the method of any of claims 1-7.

10. A vehicle, comprising the powertrain according to claim 9.

## Patentansprüche

1. Verfahren zum Herstellen eines Antriebsstrangs, das ein Anfertigen eines Gehäuses, das mehrere Kühlkanäle (110), die sich schneiden und miteinander kommunizieren, enthält, wobei das Gehäuse (100) ein Druckgussteil ist, und ein Anfertigen einer Innenwand des Kühlkanals (11, 22, 31, 110) derart, dass sie eine kompakte Schicht (120) aufweist, umfasst, wobei eine Dichte der kompakten Schicht (120) größer als die Dichte eines weiteren Teils des Gehäuses ist;
wobei mindestens einer der Kühlkanäle (110) durch Anordnen einer vorintegrierten Komponente (300) in einer Druckgussform (200) und Entfernen der vorintegrierten Komponente (300), nachdem der Druckgussteil entformt worden ist, gebildet wird, **dadurch gekennzeichnet, dass**
die vorintegrierte Komponente einen Hauptabschnitt (311) und einen Führungsabschnitt (312) mit einer sich verjüngenden Struktur umfasst;
der Hauptabschnitt (311) in ein Positionierungsloch an der Druckgussform (200) eingesetzt ist und
der Führungsabschnitt (312) eine Führung zum Einsetzen des Hauptabschnitts (311) in das Positionierungsloch bereitstellt.

2. Verfahren nach Anspruch 1, wobei ein Winkel, der zwischen beliebigen zwei der Kühlkanäle (110), die sich schneiden und miteinander kommunizieren, enthalten ist, im Bereich von 30° bis 150° liegt.

3. Verfahren nach Anspruch 2, wobei der Winkel zwischen beliebigen zwei der Kühlkanäle (110), die sich schneiden und miteinander kommunizieren, enthalten ist, 45°, 60° oder 90° beträgt.

4. Verfahren nach einem der Ansprüche 1 bis 3, wobei eine Dicke der kompakten Schicht (120) im Bereich von 0,5 mm bis 1,5 mm liegt.

5. Verfahren nach Anspruch 1,
wobei die vorintegrierte Komponente (300) mindestens zwei vorintegrierte Teile umfasst und die mindestens zwei vorintegrierten Teile einander schneiden, und nachdem die mindestens zwei vorintegrierten Teile entfernt worden sind, mindestens zwei Kühlkanäle (110), die sich schneiden und miteinander kommunizieren, im Gehäuse (100) gebildet sind.

6. Verfahren nach Anspruch 1, wobei die mehreren Kühlkanäle (110) einen ersten Kühlkanal (41, 111), einen zweiten Kühlkanal (42, 112) und einen dritten Kühlkanal (113) umfassen;
die vorintegrierte Komponente (300) einen ersten vorintegrierten Teil (310), einen zweiten vorintegrierten Teil (320) und einen dritten vorintegrierten Teil (330) umfasst; sowohl der erste vorintegrierte Teil (310) als auch der dritte vorintegrierte Teil den zweiten vorintegrierten Teil (320) schneiden und
nachdem der erste vorintegrierte Teil (310), der zweite vorintegrierte Teil (320) und der dritte vorintegrierte Teil (330) entfernt worden sind, ein erster Kühlkanal (41, 111), ein zweiter Kühlkanal (42, 112) und ein dritter Kühlkanal (113) im Gehäuse (100) gebildet sind und sowohl der erste Kühlkanal (41, 111) als auch der dritte Kühlkanal den zweiten Kühlkanal (42, 112) schneiden und mit ihm kommunizieren.

7. Verfahren nach einem der Ansprüche 1 bis 5, wobei die vorintegrierte Komponente (300) durch Tieflochbohren oder zentriertes Bohren entfernt wird.

8. Verfahren nach einem der Ansprüche 1 bis 6, wobei die vorintegrierte Komponente (300) unter Verwendung eines Materials wie z. B. Aluminium, einer Aluminiumlegierung, Magnesium, einer Magnesiumlegierung, Zink oder einer Zinklegierung gebildet wird.

9. Antriebsstrang, der gemäß dem Verfahren nach einem der Ansprüche 1-7 hergestellt ist.

10. Fahrzeug, das den Antriebsstrang nach Anspruch 9 umfasst.

## Revendications

1. Procédé de fabrication d'un groupe motopropulseur, comprenant la préparation d'un carter comportant une pluralité de canaux de refroidissement (110) qui se coupent et communiquent entre eux, le carter (100) prenant la forme d'une pièce coulée sous pression, et la préparation d'une paroi intérieure du canal de refroidissement (11, 22, 31, 110) pour y incorporer une couche compacte (120), la densité de la couche compacte (120) étant supérieure à la densité d'une autre partie du carter ;
au moins un des canaux de refroidissement (110) étant formé par mise en place d'un élément pré-encastré (300) dans un moule de coulage sous pression (200) et retrait de l'élément pré-encastré (300) après démoulage de la pièce coulée sous pression, **caractérisé en ce que**
l'élément pré-encastrée comprend une partie principale (311) et une partie de guidage (312) dotée d'une structure tronconique ;
la partie principale (311) est insérée dans un trou de positionnement sur le moule de coulage sous pression (200) ; et
la partie de guidage (312) sert à guider l'insertion de la partie principale (311) dans le trou de positionnement.

2. Procédé selon la revendication 1, dans lequel un angle inclus formé par deux quelconques des canaux de refroidissement (110) qui se coupent et communiquent entre eux est compris entre 30° et 150°.

3. Procédé selon la revendication 2, dans lequel l'angle inclus formé par deux quelconques des canaux de refroidissement (110) qui se coupent et communiquent entre eux est égal à 45°, 60°, ou 90°.

4. Procédé selon l'une quelconque des revendications 1 à 3, dans lequel l'épaisseur de la couche compacte (120) est comprise entre 0,5 mm et 1,5 mm.

5. Procédé selon la revendication 1,
dans lequel l'élément pré-encastré (300) comprend au moins deux pièces pré-encastrées, et les au moins deux pièces pré-encastrées se coupent ; et
après retrait des au moins deux pièces pré-encastrées, au moins deux canaux de refroidissement (110) qui se coupent et communiquent entre eux sont formés dans le carter (100).

6. Procédé selon la revendication 1, dans lequel la pluralité de canaux de refroidissement (110) comprennent un premier canal de refroidissement (41, 111), un deuxième canal de refroidissement (42, 112), et un troisième canal de refroidissement (113) ;
l'élément pré-encastré (300) comprend une première pièce pré-encastrée (310), une deuxième pièce pré-encastrée (320), et une troisième pièce pré-encastrée (330) ;
la première pièce pré-encastrée (310) et la troisième pièce pré-encastrée coupent toutes deux la deuxième pièce pré-encastrée (320) ; et
après retrait de la première pièce pré-encastrée (310), de la deuxième pièce pré-encastrée (320), et de la troisième pièce pré-encastrée (330), un premier canal de refroidissement (41, 111), un deuxième canal de refroidissement (42, 112), et un troisième canal de refroidissement (113) sont formés dans le carter (100), et le premier canal de refroidissement (41, 111) et le troisième canal de refroidissement coupent tous deux le deuxième canal de refroidissement (42, 112) et communiquent tous deux avec lui.

7. Procédé selon l'une quelconque des revendications 1 à 5, dans lequel l'élément pré-encastré (300) est retiré par perçage de trous profonds ou perçage centré.

8. Procédé selon l'une quelconque des revendications 1 à 6, dans lequel l'élément pré-encastré (300) est formé à partir d'un matériau tel que l'aluminium, un alliage d'aluminium, le magnésium, un alliage de magnésium, le zinc, ou un alliage de zinc.

9. Groupe motopropulseur fabriqué selon le procédé de l'une quelconque des revendications 1 à 7.

10. Véhicule, comprenant le groupe motopropulseur selon la revendication 9.
